# EUROPÄISCHE PATENTANMELDUNG

(11) **EP 3 196 225 A1**
(43) Veröffentlichungstag der Anmeldung: **26.07.2017**
(21) Anmeldenummer: 16152091.1
(22) Anmeldetag: 20.01.2016
(51) Int. Cl.: C08G 69/18

(54) **POLYMERISIERBARE ZUSAMMENSETZUNG**

(71) Anmelder: LANXESS Deutschland GmbH, 50569 Köln (DE)
(72) Erfinder: MORICK, Joachim, 51371 Leverkusen (DE); WITT, Michael, 95488 Eckersdorf (DE); GITTEL, Dieter, 51371 Leverkusen (DE)

(57) **Zusammenfassung**

Polymerisierbare Zusammensetzung, enthaltend
a) wenigstens ein zyklisches Amid,
b) 2.8 bis 3.5, vorzugsweise 2.9 bis 3.1 Gew.-% wenigstens eines geblocketen Polyisocyanats, und
c) 1.2 bis 1.4 Gew.-% wenigstens eines Katalysators zur Polymerisation des zyklischen Amids,
wobei das Gewichtsverhältnis der Komponenten b) zu c) 2.0 bis 2.9 beträgt und die Gewichts-% Angaben jeweils auf die Summe der Komponenten a) bis c) bezogen sind.

## Beschreibung

Die vorliegende Erfindung betrifft eine polymerisierbare Zusammensetzung, enthaltend eine spezielle Aktivator/Katalysatormischung, ein Verfahren zu ihrer Herstellung sowie ein Verfahren zur Herstellung eines faserverstärkten Verbundwerkstoffs unter Verwendung dieser polymerisierbaren Zusammensetzung.

Es ist bekannt, dass bei der Herstellung von derartigen Verbundkunststoffen üblicherweise ein Lactam zusammen mit mindestens einem Katalysator und mindestens einem Aktivator in eine Kavität überführt wird, in welche zuvor das textile Verstärkungsgewebe eingelegt wurde.

Das Gewebe wird dabei zunächst durch eine niedrigviskose Monomerschmelze getränkt und dann zusammen mit weiteren monomeren Lactam in der Form anionisch polymerisiert, wobei direkt oder "in-situ" das Verbundkunststoff-Bauteil entsteht. Ein solches Verfahren wird im Folgenden als "reaction injection moulding" von Polyamid 6, kurz RIM PA 6 bezeichnet.

Erst der Aktivator erlaubt es, die Polymerisationstemperatur so weit herabzusenken, dass die Polymerisation für technische Prozesse interessant wird und innerhalb weniger Minuten ein Verbundkörper aus der Form entnommen werden kann.

Die Kunststoffmatrix von RIM PA 6 Verbundkunststoffen entspricht klassischem "Guss-PA 6";, siehe dazu auch P. Wagner, Kunststoffe 73, 10 (1983), Seiten 588 - 590.

Als Aktivatoren für die anionische Caprolactampolymerisation werden bevorzugt Isocyanate und Säurehalogenide eingesetzt, insbesondere mit Caprolactam geblockte Isocanate.

Diese geblockten Isocyanate weisen, je nach chemischer Architektur, eine charakteristische Entblockungstemperatur auf. Ein Beispiel eines Aktivators, der kurze Zykluszeiten ermöglicht, ist ein mit Caprolactam geblocktes Hexamethylendiisocyant.

Im entblockten Zustand hat die dann freie Isocyanatgruppe das Potential, mit polaren Gruppen, insbesondere Hydroxylgruppen, zu reagieren, die sich auf der Faser-Oberfläche bzw. auf der Schlichte befinden.

Zur Erzielung guter mechanischer Eigenschaften ist bei Faserverbund-Werkstoffen die Qualität der Anbindung zwischen Faser und Matrix wichtig. Aus diesem Grund werden Verstärkungsfasern meist mit einer sogenannten haftvermittelnden Schlichte vorbehandelt, um die geringe chemische Ähnlichkeit zwischen Fasern und umgebender Matrix zu verbessern.

Die aufgebrachten Schlichten stellen damit die Verbindung oder den Kraftschluss zur eigentlichen Matrix her.

Es ist bekannt, dass eine Vielzahl unterschiedlicher Haftvermittler zur Verfügung steht, wobei je nach Matrixmaterial und Fasermaterial ein geeigneter Vermittler oder eine geeignete Mischung von Haftvermittlern auszuwählen ist.

Man unterscheidet bei der anionischen Caprolactampolymerisation zur Herstellung von Verbundkunststoffen grundsätzlich zwei Arten von Schlichte:

### Verträgliche Schlichte:

Diese Art von Schlichte ist mit der anionischen Polymerisation verträglich, beeinflusst die Polymerisation aber nicht wesentlich.

### Reaktive Schlichte:

Die reaktive Schlichte enthält auf der Faseroberfläche in der Regel chemische Gruppen, die aktiv sind und daher in das Polymerisationsgeschehen eingreifen. Im Idealfall wachsen die Polymerketten von der Faseroberfläche aus. Derartige Schlichten sind beispielsweise in der DE102010040027B4 beschrieben.

Die Aufbringung von reaktiven Schlichten erfordert in jedem Fall ein aufwendiges Verfahren, das zu einer deutlichen Verteuerung der textilen Verstärkung führt. Nachteilig ist, dass die Polymerisationsrezeptur an Art und Menge des mit reaktiver Schlichte behandelten Fasermaterials angepasst werden muss, um gute Ergebnisse zu erzielen.

Die Herstellung von Faserverbundwerkstoffen ist bereits aus zahlreichen Veröffentlichungen bekannt, jedoch ist dafür meistens ein umständliches Verfahren und/oder aufwendig zu produzierende Ausgangsstoffe bzw. -mischungen erforderlich, um Faserverbundwerkstoffen mit akzeptablen Eigenschaften zu bekommen. So beschreibt die WO2012/045806 als auch die WO2014/086757 ein Verfahren bei denen jeweils eine Monomermischung von Lactam, Aktivator und Katalysator zunächst aufwendig in einem Schmelzverfahren hergestellt werden muss, um dann in einem, nachgelagerten Schritt mit einem Fasermaterial zu einem Faserverbundwerkstoffen mit guten Restmomonerengehalten und guten Eigenschaften umgesetzt zu werden.

### Stellung der Aufgabe:

Ohne die Verwendung von Fasern, die mit "reaktiver Schlichte" modifiziert wurden, ist die Anbindungen zwischen Fasern und Matrix bislang nicht optimal, was beispielsweise an Hand von Biegefestigkeiten der Verbundwerkstoffe beurteilt werden kann.

Es besteht daher weiterhin Bedarf an einer Lösung zur Herstellung eines faserverstärkten Verbundwerkstoffs, bei dem die Nachteile der aus dem Stand der Technik bekannten Verfahren vermieden werden und bei denen gute Faserverbundwerkstoffe mit geringen Restmonomerengehalten in einfacherer Form erhalten werden können.

Gleichzeitig ist ohne die Verwendung von Fasern, die mit "reaktiver Schlichte" modifiziert wurden, die Anbindungen zwischen Fasern und Matrix bislang nicht optimal, was beispielsweise an Hand von Biegefestigkeiten der Verbundwerkstoffe beurteilt werden kann.

Es wurde folglich auch nach Wegen gesucht, wie auch bei Verwendung von Fasern mit einer "verträglichen Schlichte" sehr gute Anbindungen zwischen Faser und Matrix und damit ein sehr hohes mechanisches Niveau erreicht werden kann.

### Lösung der Aufgabe und Gegenstand der Erfindung:

Überraschend wurde nun gefunden, dass eine sehr gute Anbindung zwischen Faser und Matrix resultiert, sich also besonders stabile Faserverbundwerkstoffe, insbesondere solche mit einer hohen Biegefestigkeit und einem geringen Restmonomerengehalt, herstellen lassen, wenn die nachfolgende polymerisierbare Zusammensetzung verwendet wird.

Die Erfindung betrifft eine polymerisierbare Zusammensetzung, enthaltend
a) wenigstens ein zyklisches Amid, vorzugsweise 95,1 bis 96 Gew.%,
b) 2.8 bis 3.5, vorzugsweise 2.9 bis 3.1 Gew.-% wenigstens eines geblocketen Polyisocyanats, und
c) 1.2 bis 1.4 Gew.-% wenigstens eines Katalysators zur Polymerisation des zyklischen Amids,
wobei das Gewichtsverhältnis der Komponenten b) zu c) 2.0 bis 2.9, vorzugsweise 2.2 bis 2.8 beträgt und die Gewichts-% Angaben jeweils auf die Summe der Komponenten a) bis c) bezogen sind.

### Komponente a)

Als zyklisches Amid der Komponente a) wird vorzugsweise ein Amid der allgemeinen Formel (I) eingesetzt, 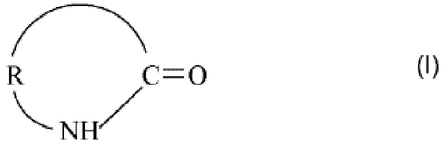 wobei R für eine C₃-C₁₃-Alkylengruppe, insbesondere für eine C₅-C₁₁-Alkylengruppe steht.

Als zyklische Amide der Komponente a) eignen sich insbesondere Lactame der Formel (I), wie ε-Caprolactam, 2-Piperidon (δ-Valerolactam), 2-Pyrrolidon (γ-Butyrolactam), Önanthlactam, Lauryllactam, Laurinlactam oder deren Mischungen. Bevorzugt steht das zyklisches Amid der Komponente a) für Caprolactam, Lauryllactam oder deren Mischungen. Besonders bevorzugt wird als Lactam ausschliesslich Caprolactam oder ausschliesslich Lauryllactam eingesetzt.

### Komponente b)

Bei dem Aktivator der Komponente b) handelt es sich vorzugsweise um solche auf Basis geblockte aliphatische Polyisocyanate, wie Isophorondiisocyanat (IPDI) oder insbesondere solche der Formel OCN-(CH₂)₄₋₂₀-NCO wie Butylendiisocyanat, Hexamethylendiisocyanat (HDI), Octamethylendiisocyanat, Decamethylendiisocyanat, Undecamethylendiisocyanat oder Dodecamethylen-diisocyanat. Besonders bevorzugt ist geblocktes Hexamethylendiisocyanat (HDI).

Als Blockierungmittel der Polyisocyanate der Komponente b) ist Lactam blockiertes Isocanat bevorzugt, insbesondere Caprolactam-blockiertes Polyisocyanat. Dabei können grundsätzlich auch verschieden blockierte Polyisocyanate in einer Mischung zum Einsatz kommen.

Besonders bevorzugt ist Caprolactam geblocktes HDI, N,N'-Hexan-1,6-diylbis(hexahydro-2-oxo-1H-azepine-1-carboxamid), CAS Nr.: 5888-87-9.

Das Massenverhältnis von dem zyklischen Amid der Komponente a) zu dem geblockten Polyisocyanat der Komponente b) kann in weiten Grenzen variiert werden und beträgt in der Regel 1: 1 bis 10000: 1, bevorzugt 5: 1 bis 2000: 1, besonders bevorzugt 20: 1 bis 1000: 1.

### Komponente c)

Der Katalysator c) zur Polymerisation des zyklischen Amids wird vorzugsweise ausgewählt aus der Gruppe, bestehend aus Natriumcaprolactamat, Kaliumcaprolactamat, Bromid-Magnesiumcaprolactamat, Chlorid-Magnesium-caprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kaliumhydroxid, Kaliummethanolat, Kalium-ethanolat, Kaliumpropanolat und Kaliumbutanolat, bevorzugt aus der Gruppe bestehend aus Natriumhydrid, Natrium und Natriumcaprolactamat, besonders bevorzugt Natriumcaprolactamat.

Das Molverhältnis von zyklischem Amid a) zu Katalysator c) kann in weiten Grenzen variiert werden, es beträgt in der Regel 1: 1 bis 10000: 1, bevorzugt 5: 1 bis 1000: 1, besonders bevorzugt 1: 1 bis 500: 1.

Bevorzugt enthält die erfindungsgemäße polymerisierbare Zusammensetzung 50 bis 100 Gew.% der Komponenten a) bis c), vorzugsweise 80 bis 100 Gew.-% bezogen auf das Gesamtgewicht der Zusammensetzung.

Die erfindungsgemäße polymerisierbare Zusammensetzung kann ein oder mehrere Polymere enthalten, wobei das Polymer prinzipiell ausgewählt sein kann unter Polymeren, die bei der Polymerisation der erfindungsgemäß polymerisierbaren Zusammensetzung erhalten werden, davon verschiedenen Polymeren und Polymerblends.

In einer geeigneten Ausführungsform kann die erfindungsgemäße polymerisierbare Zusammensetzung auch Füllstoff enthalten. Füllstoffe, insbesondere partikuläre Füllstoffe können eine weite Bandbreite von Teilchengrößen aufweisen, die von staubförmigen bis grobkörnigen Partikeln reichen. Als Füllmaterial kommen organische oder anorganische Füll- und/oder Faserstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z.B. Glaskugeln, nanoskalige Füllstoffe, wie Kohlenstoff-Nanoröhren, Carbon black, nanoskalige Schichtsilikate, nanoskaliges Aluminiumoxid (Al₂O₃), nanoskaliges Titandioxid (TiO₂), Carbon Nanotubes, Graphen, Schichtsilikate und nanoskaliges Siliciumdioxid (SiO₂), eingesetzt werden.

Bevorzugt werden Füllstoffe in einer Menge von 0 bis 90 Gew.-%, insbesondere von 0 bis 50 Gew.-%, bezogen auf die erfindungsgemäße polymerisierbare Zusammensetzung eingesetzt.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramid-fasern, Borfasern oder Metallfasern. Die genannten Fasern werden bevorzugt als Endlosfasern, beispielsweise in Form von Tapes, Gelegen, Geweben oder Gestricken eingesetzt. Es ist auch möglich, eine nicht geordnete Faserablage, beispielsweise in Form von Matten, Vliesen oder auch Schnittfasern unterschiedlicher Faserlänge, insbesondere von 0,1 mm bis mehrere cm Länge, vorzugsweise bis 5 cm Länge einzusetzen.

Der Einsatz dieser Fasermaterialien erfolgt jedoch vorzugsweise erst in der Anwendung der erfindungsgemäßen polymerisierbaren Zusammensetzung zur Herstellung der erfindungsgemäßen faserverstärkten Verbundwerkstoffs.

In einer bevorzugten Ausführungsform kann die erfindungsgemäße polymerisierbare Zusammensetzung einen oder mehrere weitere Zusatzstoffe enthalten. Als Zusatzstoffe können beispielsweise Stabilisatoren, wie Kupfersalze, Farbstoffe, Antistatika, Trennmittel, Antioxidantien, Lichtstabilisatoren, PVC-Stabilisatoren, Gleitmittel, Trennmittel, Treibmittel, und Kombinationen daraus zugesetzt werden. Bevorzugt sind diese Zusatzstoffe in einer Menge von 0 bis 5 Gew.-%, bevorzugt von 0 bis 4 Gew.-%, besonders bevorzugt von 0 bis 3,5 Gew.-%, bezogen auf das Gesamtgewicht der polymerisierbaren Zusammensetzung. Werden als Zusatzstoffe Flammschutzmittel oder Schlagzähigkeitsverbesserer eingesetzt, so können diese Zusatzstoffe von 0 bis 45 Gew.-%, bezogen auf das Gesamtgewicht der polymerisierbaren Zusammensetzung eingesetzt werden.

Die polymerisierbare Zusammensetzung kann wenigstens einen Zusatzstoff enthalten, vorzugsweise in einer Menge von wenigstens 0,01 Gew.-%, bezogen auf das Gesamtgewicht der polymerisierbaren Zusammensetzung, besonders bevorzugt von wenigstens 0,1 Gew.-%, bezogen auf das Gesamtgewicht der polymerisierbaren Zusammensetzung, insbesondere von wenigstens 0,5 Gew.-%, bezogen auf das Gesamtgewicht der polymerisierbaren Zusammensetzung.

Bevorzugt enthält die erfindungsgemäß polymerisierbare Zusammensetzung als Zusatzstoff wenigstens einen Schlagzähigkeitsverbesserer. Wird als Schlagzähigkeitsveresserer eine polymere Verbindung eingesetzt, so wird diese den zuvor genannten Polymeren zugerechnet. Insbesondere wird als Schlagzähigkeitsverbesserer ein Polydien-Polymer (z. B. Polybutadien, Polyisopren) eingesetzt. Diese enthalten bevorzugt Anhydrid- und/oder Epoxigruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Poly-siloxanen basieren und mittels der gängigen Verfahren hergestellt werden (z.B. Emulsionspolymerisation, Suspensionspolymerisation, Lösungspolymerisation, Gasphasenpolymerisation).

### Herstellung der polymerisierbaren Zusammensetzung

Die Erfindung betrifft weiterhin ein Verfahren zur Herstellung der polymerisierbaren Zusammensetzung dadurch gekennzeichnet, dass man ein zyklisches Amid der Komponente a) mit wenigstens einem geblocketen Polyisocyanat der Komponente b) und wenigstens einen Katalysator der Komponente c) in Kontakt bringt.

Vorzugsweise werden zur Bereitstellung der polymerisierbaren Zusammensetzung die Komponenten b) und c) zunächst unabhängig von einander in a) gemischt, dann diese Einzelmischungen miteinander gemischt.

Dabei kann das Mischen in fester Form der jeweiligen Einzelkomponenten a) und b) sowie von a) und c) erfolgen oder in flüssiger Form.

Bevorzugt erfolgt das Vermischen der zuvor bereiteten separaten Mischungen in flüssiger Form, vorzugsweise bei einer Temperatur von 70 bis 120 °C. Zum Überführen der flüssigen Mischphase der Komponenten a), b) und c) wird vorzugsweise eine Temperatur gewählt, die gleich oder grösser ist als der Schmelzpunkt der resultierenden Mischung, insbesondere 70 bis 120°C.

Das Vermischen der Komponenten kann diskontinuierlich oder kontinuierlich erfolgen. Geeignete Vorrichtungen zum Vermischen der Komponenten sind dem Fachmann bekannt. Zum diskontinuierlichen Vermischen werden vorzugsweise Rührkessel oder Kneter verwendet. Kontinuierliche Mischvorgänge erfolgen vorzugsweise im Extruder oder einer Spritzgießmaschine, sowie auch durch statische Mischelemente, welche in einem Mischkopf oder direkt mit im Werkzeug implementiert sind. Die Mischvorrichtung ist vorzugsweise temperierbar. Das Vermischen der Komponenten kann beispielsweise kontinuierlich in einem Extruder erfolgen.

Die Temperatur des vereinigten Gemisches aus den Komponenten a), b) und c) liegt bevorzugt bei höchstens 50 °C, besonders bevorzugt bei höchstens 30 °C, insbesondere bei höchstens 20 °C, speziell höchstens 10 °C oberhalb des Schmelzpunkts dieses Gemischs.

Die Einzelkomponenten der Aktivatoren als auch die Katalysatoren, können auch in Form von fertigen Handelsprodukten eingesetzt werden.

Als mögliche Aktivatormischung der Komponente b) gibt es ein Caprolactam-blockiertes Hexamethylendiisocyanat in Caprolactam, beispielsweise kommerziell unter der Bezeichnung Brüggolen® C20 von der Firma Brüggemann oder Addonyl® 8120 von der Firma Rhein Chemie Rheinau GmbH. Beidseitig, mit Caprolactam geblocktes Isophorondiisocyanat (IPDI) ist beispielsweise unter der Bezeichnung Crelan® VP LS 2256 bei der Firma Covestro AG erhältlich.

Als Katalysator kann eine Lösung von Natriumcaprolactamat in Caprolactam eingesetzt werden, z.B. Brüggolen® C10 der Firma Brüggemann, das 17 bis 19 Gew.-% Natriumcaprolactamat in Caprolactam bzw. Addonyl KAT NL der Firma Rhein Chemie Rheinau GmbH, das 18,5 Gew.-% Natriumcaprolactamat in Caprolactam enthält. Als Katalysator c) eignet sich ebenfalls insbesondere Bromid-Magnesiumcaprolactamat, z. B. Brüggolen® C1 der Firma Brüggemann.

Die polymerisierbare Zusammensetzung wird im Allgemeinen im flüssigen Zustand in der Nähe der Polymerisationstemperatur gehandhabt und besitzt daher eine hohe Reaktivität, so dass sich ein zügiges Inkontaktbringen mit der Faserverstärkung empfiehlt.

Die Zeit von der Bildung des vereinigten Gemischs aus den Komponenten a), b) und c) bis zur Verfestigung beträgt vorzugsweise höchstens 10 Minuten, bevorzugt höchstens 5 Minuten, insbesondere höchstens 1 Minute.

Die Zeit von der Bildung des vereinigten Gemischs aus den Komponenten a), b) und c) bis zur Verfestigung beträgt vorzugsweise 5 Sekunden bis 10 Minuten, bevorzugt 10 Sekunden bis 5 Minuten.

### Herstellung eines Faserverbundwerkstoffs

Die Erfindung betrifft weiterhin ein Verfahren zur Herstellung eines Faserverbundwerkstoffs, dadurch gekennzeichnet, dass man
i) die erfindungsgemäße polymerisierbare Zusammensetzung oder deren Einzelkomponenten a), b) und c) mit Fasern in Kontakt bringt und
ii) die resultierende Zusammensetzung bei einer Temperatur von 120 bis 300 °C, vorzugsweise bei 120 bis 250 °C, insbesondere bei 140 bis 180 °C behandelt.

Hierbei können die Fasern mit der polymerisierbaren Zusammensetzung auf verschiedenen Wegen in Kontakt gebracht werden.
1) Indem in eine beheizte, vorzugsweise mit einer Temperatur von 120 bis 170 °C, druckdichte Form Fasern, insbesondere textile-Verstärkungsstrukturen, eingelegt werden und mittels Überdruck die polymerisierbare Zusammensetzung hineingepresst wird, wobei die Faser vorzugsweise infiltriert wird und dann ggf. bei einer erhöhten Temperatur, vorzugsweise bei 120 bis 300 °C, die polymerisierbare Zusammensetzung polymerisiert.
2) Indem bei ansonsten gleichem Aufbau wie unter 1 an der druckdichten Form ein Vakuum angelegt wird und die erfindungsgemäße polymerisierbare Zusammensetzung eingesogen wird.
3) Durch eine Kombination von Unterdruck und Überdruck wie unter 1 und 2 die polymerisierbare Zusammensetzung in die Form überführt wird.
4) Die Herstellung in einem Extruder stattfindet, dessen Eingangsströme Fasern, insbesondere Kurzfasern, und die polymerisierbare Zusammensetzung enthalten, wobei der Extruder bei einer Temperatur oberhalb der Schmelztemperatur des aus der polymerisierbaren Zusammensetzung resultierenden Polymers, insbesondere PA6, betrieben wird.
5) Die Herstellung in einem Extruder stattfindet, dessen Eingangsströme eine oder mehrere Einzelkomponenten der erfindungsgemäßen polymerisierbaren Zusammensetzung in fester oder flüssiger Form und Fasern enthalten.
6) Die Herstellung durch klassisches Schleudergussverfahren stattfindet, wobei die erfindungsgemäßen polymerisierbare Zusammensetzung oder deren Einzelkomponenten a), b) und c) in fester oder flüssiger Form eingetragen werden und mit Fasern, vorzugsweise in Form von Kurzfasern oder in Form von textilen Verstärkungsstrukturen, verstärkt werden.
7) Die Herstellung kontinuierlich durch Tränkung von Fasern, insbesondere von Geweben erfolgt, die nach Aufbringen der erfindungsgemäßen polymerisierbaren Zusammensetzung in flüssiger Form bei einer Temperatur von 120 bis 300 °C polymerisiert wird, wodurch Composite Sheets, Organobleche, Profile oder Rohre aus endlosfaserverstärkten Polyamiden entstehen.

Bevorzugt ist die Alternative 1, 2 oder 3, wobei in eine beheizbare, druckdichte Form Fasern, insbesondere textile-Verstärkungsstrukturen eingelegt werden. Anschließend wird die polymerisierbare Zusammensetzung mittels Überdruck von 1 bis 150 bar und/oder bei einem Unterdruck der Form (Werkzeug) von 10 bis 900 mbar in die Form injiziert.

Nach vollständiger Füllung der Form mit der erfindungsgemäßen polymerisierbaren Zusammensetzung erfolgt die Polymerisation bei Temperaturen von 120 bis 250 °C, vorzugsweise bei 140 bis 180 °C. Es entsteht direkt in der Form das Verbundbauteil.

Ebenfalls bevorzugt ist die obige Verfahrensweise, wobei in Abänderung an der druckdichten Form ein Unterdruck angelegt wird, vorzugsweise von 5 bis 800 mbar und die polymerisierbare Zusammensetzung in die Form gesogen wird und nach Befüllen der Form mit der polymerisierbaren Zusammensetzung die Temperatur zur Polymerisation vorzugsweise auf eine Temperatur von 120 bis 250 °C erhöht wird.

Auch eine Kombination von Unterdruck und Überdruck zum Befüllen der Form mit der polymerisierbaren Zusammensetzung ist möglich.

Vorteilhaft ist es weiterhin, das die Polymerisation in einem klassischen Schleudergussverfahren vorzunehmen, wobei die polymerisierbare Zusammensetzung in fester oder flüssiger Form in die Form eingetragen wird und die Fasern in Form von Kurzfasern oder in Form von zuvor ausgelegten textilen Verstärkungen eingebracht werden.

Bei der Herstellung der erfindungsgemäß polymerisierbaren Zusammensetzung, wie auch bei der erfindungsgemäßen Herstellung der faserverstärkten Verbundwerkstoffe, kann es vorteilhaft sein, den Anteil von an der Herstellung der polymerisierbaren Zusammensetzung oder des faserverstärkten Verbundwerkstoffs nicht beteiligten Komponenten so gering wie möglich zu halten. Dazu zählen speziell Wasser, Kohlendioxid und/oder Sauerstoff. In einer speziellen Ausführung sind daher die eingesetzten Komponenten und Apparaturen im Wesentlichen frei von Wasser, Kohlendioxid und/oder Sauerstoff. Eine Möglichkeit ist, dass die verwendete geschlossene Werkzeugkavität mit Vakuum beaufschlagt wird, bevor die Schmelze injiziert wird. Eine weitere zusätzliche Option ist das Verwenden von Inertgas, wie z. B. Stickstoff oder Argon. Die verwendete polymerisierbare Zusammensetzung wie auch die Füll- oder Verstärkungsstoffe (Fasern, wie textile Flächengebilde) können in Inertgasatmosphäre gelagert bzw. damit überlagert werden.

### Fasern

Bevorzugt werden im erfindungsgemäßen Verfahren als Fasern Kurzfasern, Langfasern, Endlosfasern oder Mischungen davon eingesetzt.

Im Sinne der Erfindung haben "Kurzfasern" eine Länge von 0,1 bis 1 mm, "Langfasern" eine Länge von 1 bis 50 mm und "Endlosfasern" eine Länge von grösser als 50 mm. Endlosfasern werden zur Herstellung der faserverstärkten Verbundwerkstoffe, vorzugsweise in Form einer textilen Struktur, z. B. als Gewebe, Gewirke, Gestricke, Gelege oder Vliese eingesetzt. Bauteile mit gestreckten Endlosfasern erzielen in der Regel sehr hohe Steifigkeits- und Festigkeitswerte.

Bevorzugt wird als Fasermaterial ein aus parallel angeordneten Endlos-Garnen oder Endlos-Rovings, welche zu textilen Flächengebilden wie Gelegen, Tapes, Geflechten und Geweben u. ä. weiter verarbeitet wurden, eingesetzt.

Die vorstehend benannten textilen Faserstrukturen können ein- oder mehrlagig sowie in unterschiedlicher Kombination bezüglich textiler Flächengebilde, Faserarten und deren Fasermengen für die Bauteilherstellung verwendet werden. Bevorzugt werden Gelege, Multiaxial-Gelege, (Multiaxial-) Geflechte oder Gewebe eingesetzt, die aus zwei oder mehr als zwei, vorzugsweise 2 bis 6 Lagen bestehen.

Die eingesetzten Fasermaterialien enthalten als Fasern vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, Polyamide, Polyimide, Aramide, Flüssigkristallpolymere, Polyphenylensulfide, Polyetherketone, Polyetheretherketone, Polyetherimide, Baumwolle, Cellulose und andere Naturfasern, beispielsweise Flachs, Sisal, Kenaf, Hanf, Abaca. Bevorzugt sind hochschmelzende Materialien, beispielsweise Gläser, Kohlenstoff, Aramide, Flüssigkristallpolymere, Polyphenylensulfide, Polyether-ketone, Polyetheretherketone und Polyetherimide, besonders bevorzugt sind Glasfasern, Kohlenstofffasern, Aramidfasern, Stahlfasern, Kaliumtitanatfasern, Keramikfasern und/oder sonstige hinreichend temperaturbeständige polymere Fasern oder Fäden.

Fasern können in einer Menge von 5 bis 65 Vol.-%, bezogen auf den resultierenden Faserverbundwerkstoff, entsprechend beispielsweise bei Verwendung von Glasfasern 10 - 80 Gew.-%, eingesetzt werden, bevorzugt aber in einer Menge von 45-65 Vol.-%, bezogen auf den Faserverbundwerkstoff, wobei besonders bevorzugte Fasern Glasfasern oder Kohlefasern sind.

Das erfindungsgemäße Verfahren ermöglicht eine sehr gute Imprägnierung der Verstärkungsfasern bei wirtschaftlich akzeptablen Polymerisationszeiten und die Bildung von Produkten mit guten mechanischen Eigenschaften.

Mit Hilfe des erfindungsgemäßen Verfahrens ist es möglich, faserverstärkte Verbundwerkstoffe mit einem hohen Faseranteil und, falls vorhanden, Füllstoffanteil herzustellen.

Besonders bevorzugt, ist das erfindungsgemäße Verfahren, wenn man die polymerisierbare Zusammensetzung oder deren Einzelkomponenten a), b) und c) mit 5 bis 65 Vol.-% Fasern, insbesondere Glasfasern, bezogen auf den resultierenden Faserverbundwerkstoff, bevorzugt in einer Menge von 45-65 Vol.-% in Kontakt bringt.

Besonders bevorzugt ist das erfindungsgemäße Verfahren zur Herstellung eines Faserverbundwerkstoffs mit einem Faseranteil, insbesondere Glasfaseranteil von 45 - 65 Vol-%, wobei ein Restgehalt an monomerem Amid a) von höchstens 0,3 Gew.-%, besonders bevorzugt höchstens 0,25 Gew.-%, bezogen auf den Faserverbundwerkstoff erzielt wird.

### Beispiele:

In einem Dreihalskolben wurden 200 g ε-Caprolactam und die in Tabelle 1 angegebene Menge an Katalysator, Natriumcaprolactamat, CAS-Nr. 2123-24-2 (18,5 Gew.-%ig in Caprolactam; in Form von Addonyl Kat NL (Rhein Chemie Rheinau GmbH)) eingewogen.

Ein zweiter Dreihalskolben wurde mit 200g ε-Caprolactam und mit der ebenfalls in Tabelle 1 spezifizierten Menge an Addonyl 8120 befüllt.

Bei Addonyl 8120 handelt es sich um ein beidseitig Caprolactam-geblocktes Hexamethylendiisocyanat, konkret um N,N'-Hexan-1,6-diylbis(hexahydro-2-oxo-1H-azepine-1-carboxamid), CAS Nr.: 5888-87-9.

Der Inhalt beider Kolben wurde in auf 135 °C vorgeheizten Ölbädern aufgeschmolzen. Anschließend wurde bei dieser Temperatur für 10 Minuten evakuiert. Dann wurden beide Kolben mit Stickstoff befüllt und die Ölbäder entfernt.

Die Schmelzen wurden abgekühlt bis die Temperatur der Schmelzen 100 °C betrug.

In eine auf 150 °C vortemperierte und mit N2 gespülte druckdichte Form (Plattenwerkzeug) wurden Glasfasergelege eingelegt und danach die Kavität unter Vakuum gesetzt.

Im nächsten Schritt wird der Inhalt des Vorratsbehälters durch Anlegen eines N2-Überdruckes in die Kavität des Plattenwerkzeugs überführt und darin auspolymerisiert.

Der Faservolumengehalt war bei allen hergestellten Verbundplatten konstant und lag bei ca. 50 Vol.-%.

Die Restmonomergehalte des Faserverbundwerkstoffes wurden über Extraktion bestimmt; die Verbundplatten wurden direkt im Anschluss in 2x20x60 mm Prüfkörper zersägt, luftdicht verpackt und zur Bestimmung der Biegefestigkeiten entsprechend DIN EN 2562 an die Polymer Service GmbH in Merseburg geschickt.

**Die Tabelle 1: Verwendete Polymerisationsrezepturen, damit erzielte Restmonomergehalte und die, entsprechend DIN EN 2562 gemessenen, Biegefestigkeiten, Entnahme der Platte aus der Form nach 4 Minuten (Mengen in Gramm)**

| | Faser* | Addonyl 8120 | Kat NL | Katalysator pur | RMG in % | Biegefestigkeit (längs) in MPa |
|---|---|---|---|---|---|---|
| | | Gew-% | Gew.-% | Gew.-% | | |
| VGB1 | A | 1 | 4 | 0.74 | 0,62 | 933 |
| VGB2 | A | 1 | 6 | 1.10 | 0,47 | 1075 |
| VGB3 | A | 1,5 | 6 | 1.10 | 0,71 | 1017 |
| VGB4 | A | 1,69 | 3,21 | 0.59 | 0,78 | 900 |
| VGB5 | A | 2,0 | 3,0 | 0.56 | 0,99 | 1110 |
| VGB6 | A | 2,0 | 5,0 | 0.93 | 0,37 | 1123 |
| VGB7 | A | 2,0 | 6,0 | 1.10 | 0,59 | 1008 |
| VGB8 | A | 2,5 | 6,0 | 1.10 | 0,40 | 948 |
| VGB9 | A | 2,5 | 7,0 | 1.30 | 0,28 | 1050 |
| VGB10 | A | 3,0 | 6,0 | 1.10 | 0,53 | 950 |
| **ERG1** | **A** | **3,0** | **7,0** | **1.30** | **0,22** | **1337** |
| VGB11 | A | 4,0 | 7,0 | 1.30 | 0,40 | 1110 |
| VGB12 | A | 3,0 | 8,0 | 1.48 | 0,53 | 1010 |
| VGB13 | A | 4,0 | 8,0 | 1.48 | 0,71 | 1007 |

| | | | | | | |
|---|---|---|---|---|---|---|
| Abkürzungen: VGB: Vergleichsbeispiel ERG: Erfindungsgemäß RMG: Restmonomergehalt *: Verstärkung A: Vier Lagen eines Glasfaser-Roving-Geleges der Firma Johns Manville (JM871) zum Einsatz. Dabei handelt es sich um eine Faser mit einer handelsüblichen, auf Polyamid abgestimmten, nicht reaktiven Schlichte. In die Kavität der Form des Plattenwerkzeugs wurden jeweils 4 Lagen des Gelegetyps eingelegt | | | | | | |

## Patentansprüche

1. Polymerisierbare Zusammensetzung, enthaltend
a) wenigstens ein zyklisches Amid,
b) 2.8 bis 3.5, vorzugsweise 2.9 bis 3.1 Gew.-% wenigstens eines geblocketen Polyisocyanats, und
c) 1.2 bis 1.4 Gew.-% wenigstens eines Katalysators zur Polymerisation des zyklischen Amids,
wobei das Gewichtsverhältnis der Komponenten b) zu c) 2.0 bis 2.9, vorzugsweise 2.2 bis 2.8 beträgt und die Gewichts-% Angaben jeweils auf die Summe der Komponenten a) bis c) bezogen sind.

2. Polymerisierbare Zusammensetzung gemäß Anspruch 1, **dadurch gekennzeichnet, dass** das zyklisches Amid der allgemeinen Formel (I) entspricht, 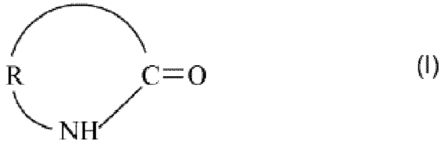 wobei R für eine C₃-C₁₃-Alkylengruppe, insbesondere für eine C₅-C₁₁-Alkylengruppe steht.

3. Polymerisierbare Zusammensetzung nach wenigstens einem der Ansprüche 1 bis 2, **dadurch gekennzeichnet, dass** das zyklisches Amid Lauryllactam, Caprolactam oder deren Mischung entspricht.

4. Polymerisierbare Zusammensetzung nach wenigstens einem der vorangegangenen Ansprüche, **dadurch gekennzeichnet**, die Komponente b) wenigstens HDI als geblocktes Isocyanat enthält.

5. Polymerisierbare Zusammensetzung nach wenigstens einem der vorangegangenen Ansprüche 1 bis 4, enthaltend wenigstens einen Katalysator c) zur Polymerisation des cyclischen Amids ausgewählt aus der Gruppe, bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kaliumhydroxid, Kaliummethanolat, Kaliumethanolat, Kaliumpropanolat und Kalium-butanolat, bevorzugt aus der Gruppe bestehend aus Natriumhydrid, Natrium und Natriumcaprolactamat, besonders bevorzugt Natriumcaprolactamat.

6. Verfahren zur Herstellung einer Polymerisierbare Zusammensetzung nach wenigstens einem der vorangegangenen Ansprüche 1 bis 5, **dadurch gekennzeichnet, dass** man ein zyklisches Amid der Komponente a) mit wenigstens einem geblocketen Polyisocyanat der Komponente b) und wenigstens einen Katalysator der Komponente c) in Kontakt bringt.

7. Verfahren zur Herstellung eines Faserverbundwerkstoffs, **dadurch gekennzeichnet, dass** man
i) die polymerisierbare Zusammensetzung gemäß wenigstens einem der Ansprüche 1 bis 5 oder deren Einzelkomponenten a), b) und c) mit Fasern in Kontakt bringt und
ii) die resultierende Zusammensetzung bei einer Temperatur von 120 bis 300 °C behandelt.

8. Verfahren gemäß Anspruch 7, **dadurch gekennzeichnet, dass** man die polymerisierbare Zusammensetzung gemäß wenigstens einem der Ansprüche 1 bis 5 oder deren Einzelkomponenten a), b) und c) mit 5 bis 65 Vol.-%, bevorzugt mit 45 bis 65 Vol.-% Fasern, bezogen auf den Faserverbundwerkstoff, in Kontakt bringt.

9. Verfahren gemäß Anspruch 7, **dadurch gekennzeichnet, dass** als Fasern Glasfasern eingesetzt werden.

10. Verfahren gemäß wenigstens einem der Ansprüche 7 bis 9, **dadurch gekennzeichnet, dass** der Faserverbundwerkstoff ein Restgehalt an monomerem Amid a) von höchstens 0,3 Gew.-%, besonders bevorzugt höchstens 0,25 Gew.-%, bezogen auf den Faserverbundwerkstoff besitzt.

11. Faserverbundwerkstoff erhältlich nach dem Verfahren gemäß wenigstens einem der Ansprüche 7 bis 10.
